# EUROPÄISCHE PATENTSCHRIFT

(11) **EP 2 385 409 B1**
(45) Veröffentlichungstag und Bekanntmachung des Hinweises auf die Patenterteilung: **23.12.2015**
(21) Anmeldenummer: 11157763.1
(22) Anmeldetag: 10.03.2011
(51) Int. Cl.: G02B 23/12, G02B 23/18

(54) **Optisches System mit einer Verbindungsbrücke**
Optical system with a connection bridge
Système optique doté d'un pont de liaison

(30) Priorität: 04.05.2010 DE 102010016785
(43) Veröffentlichungstag der Anmeldung: 09.11.2011
(73) Patentinhaber: SCHMIDT & BENDER GmbH & Co. KG, 35444 Biebertal (DE)
(72) Erfinder: vom Hagen, Dr., Christoph Hilmar, 35390 Gießen (DE); Müller, Sven Roman, 35310 Butzbach (DE)
(74) Vertreter: Patentanwälte Olbricht Buchhold Keulertz

(56) Entgegenhaltungen:
- EP-A1- 1 783 529
- US-A- 5 229 598
- US-A- 5 535 053
- 'OTIS-14 user's guide', [Online] 11 September 2008, XP055113406 Gefunden im Internet: <URL:http://dl.owneriq.net/6/69533b3d-37a6- 412d-aa61-e737e04b41d9.pdf> [gefunden am 2014-04-10]

## Beschreibung

Die Erfindung betrifft ein optisches System mit einer Verbindungsbrücke und mindestens zwei optischen Vorrichtungen, die jeweils eine Kupplungsvorrichtung mit mechanischem Kupplungsmittel aufweisen, die für eine mechanische Kupplungsvorrichtung der Verbindungsbrücke ausgestaltet sind.

Derartige optische Systeme mit solchen Verbindungsbrücken sind grundsätzlich in Form von Vergrößerungsgläsern, bzw. Ferngläsern bekannt. Diese bekannten Verbindungsbrücken sind üblicherweise fest mit dem jeweiligen Fernrohr verbunden, so dass eine Einheit aus zwei Fernrohren und einer Verbindungsbrücke besteht. Nachteilig bei den bekannten Verbindungsbrücken ist die mangelnde Flexibilität im Einsatz. So ist es nicht möglich, je nach Einsatzsituation unterschiedliche optische Vorrichtungen zu verwenden, bzw. unterschiedliche optische Vorrichtungen miteinander zu kombinieren. Ähnliche Brücken sind grundsätzlich auch für Nachtsichtgeräte bekannt, die als mechanische Verbindung zwischen zwei, zum Beispiel als Restlichtverstärker ausgebildeten, optischen Vorrichtungen dienen. Auch hier besteht durch die feste Verbindung zwischen den Restlichtverstärken und der Verbindungsbrücke ein erheblicher Mangel an Flexibilität im Einsatz. Die Funktionalität dieser optischen Systeme ist dadurch weiter eingegrenzt, dass jede optische Vorrichtung isoliert für sich funktioniert. Im Falle eines Einsatzes sogenannter Bildverstärkerröhren, benötigt jede optische Einrichtung eine eigene Regelungseinrichtung.

Aus EP1783529 A1 ist ein modulares Nachtsichtgerät bekannt, welches aus zwei monokularen Nachtsichtgeräten sowie einer Verbindungsbrücke besteht.

Aufgabe der vorliegenden Erfindung ist es nun die Nachteile bekannter Vorrichtungen zu beheben. Insbesondere ist es Aufgabe der vorliegenden Erfindung ein optisches System mit einer Verbindungsbrücke zur Verfügung zu stellen, die hinsichtlich verschiedener Einsatzsituationen einen hohen Grad an Flexibilität aufweist und zudem einfach herstellbar ist. Ferner sollte sie über ein geringes Gewicht verfügen und gute optische Eigenschaften aufweisen.

Gelöst wird diese Aufgabe durch ein optisches System mit den Merkmalen des unabhängigen Anspruchs 1. Vorteilhafte Ausgestaltungen der Erfindung ergeben sich aus den an den unabhängigen Anspruch anschließenden Unteransprüchen.

Bei einem optischen System mit einer Verbindungsbrücke und mindestens zwei optischen Vorrichtungen, die jeweils eine Kupplungsvorrichtung mit mechanischem Kupplungsmittel aufweisen, die für eine mechanische Kupplungsvorrichtungen der Verbindungsbrücke ausgestaltet sind, sieht die Erfindung vor, dass die optischen Vorrichtungen elektronisch mit einer Auswertevorrichtung verbunden sind.

Ein erfindungsgemäßes optisches System besteht dabei aus einer intelligenten Verbindungsbrücke, die eine Auswerteeinheit aufweist und bevorzugt zwei optischen Vorrichtungen. Dies beruht auf der Tatsache, dass das erfindungsgemäße System hauptsächlich bei Menschen zum Einsatz kommen soll. Daher ist eine Beschränkung auf zwei optische Vorrichtungen, also eine optische Vorrichtung pro Auge ausreichend.

Die Auswertevorrichtung ist mittels Kupplungsmittel elektronisch mit den optischen Vorrichtungen verbunden. Die Kupplungsmittel können verschiedenartig ausgestaltet sein und neben dem Austausch elektronischer Signale auch/oder eine elektrische Verbindung zwischen der Auswerteeinheit und den optischen Vorrichtungen herstellen. Die Ausbildung der Kupplungsmittel ist dabei beliebig. Beispielhaft seinen Steckverbindungen oder Funkverbindungen genannt.

Die Auswertung von Signalen kann dabei zum Beispiel in der Aufbereitung von Signalen und deren Interpretation liegen. So ist es möglich, dass Spannungssignale von Batterien der optischen Vorrichtungen empfangen werden und diese hinsichtlich des aktuellen Ladezustandes der jeweiligen Batterie ausgewertet werden. Die Auswertevorrichtung ist bei einer solchen Ausführungsform in der Lage den jeweiligen Batterieladezustand der optischen Vorrichtungen zu erkennen und sogar zu bewerten. Ist die Auswertevorrichtung darüber hinaus derart ausgestaltet, dass eine elektrische Verbindung über elektronische Kupplungsmittel hergestellt werden kann, so kann in einer Situation in welcher der Ladezustand der Batterie der ersten optischen Vorrichtung als kritisch ausgewertet wird, eine elektrische Verbindung zu der Batterie der zweiten optischen Vorrichtung über die elektronischen Kupplungsmittel hergestellt werden. Beide optischen Vorrichtungen werden auf diese Weise mit der Energie einer einzigen Batterie versorgt. Die Funktionalität des gesamten optischen Systems bleibt damit für eine längere Zeit voll erhalten.

Es ist jedoch auch möglich, dass die Auswertevorrichtung andere oder weitere Auswertungen von Signalen vornimmt. Zum Beispiel kann die aktuelle optische Situation, also bei der Verwendung von Nachtsichtgeräten zum Beispiel die vorhandene Restlichtmenge von den optischen Vorrichtungen als Signal empfangen werden und in Abhängigkeit von der Restlichtmenge ein anderer Verstärkermodus gewählt oder eine Infrarotlampe hinzugeschaltet werden. Durch die Auswertevorrichtung und die elektronischen Kupplungsmittel wird es durch ein erfindungsgemäßes optisches System möglich, dieses intelligenter zu machen und den Benutzer bei der Nutzung der optischen Vorrichtungen zu unterstützen.

Die Auswertevorrichtung kann dabei vorteilhafter Weise von den elektronischen Kupplungsmitteln empfangene Signale hinsichtlich wenigstens einem der folgenden Parameter auswerten:
▪ Batteriestatus der optischen Vorrichtungen
▪ Nutzungssituation der optischen Vorrichtungen
▪ Umgebungsparameter der optischen Nutzungssituation
▪ Restlichtmenge

Die voran stehende Aufzählung ist dabei keinesfalls abschließend, sondern enthält nur beispielhaft verschiedene Möglichkeiten das optische System der vorliegenden Erfindung mit Zusatznutzen und damit höherem Komfort für den Benutzer auszustatten. Beim Vorsehen der Auswertung des Batteriestatus wird dabei der aktuelle Ladezustand der jeweiligen Batterie in jeder optischen Vorrichtung ausgelesen, also über den Austausch von Signalen über die elektronischen Kupplungsmittel erfasst und ausgewertet. Das Auswerten erfolgt dabei zum Beispiel hinsichtlich der ermittelten Restlaufzeit der jeweiligen Batterie und damit hinsichtlich der Restnutzungszeit der jeweiligen optischen Vorrichtung. Dabei kann bei unterschiedlichen Restnutzungszeiten der beiden optischen Vorrichtungen ein Ausgleich über die Auswertevorrichtung durchgeführt werden. Das bedeutet, dass die Auswertevorrichtung über die elektronischen Kupplungsmittel eine elektrische Verbindung zu der jeweiligen optischen Vorrichtung und damit zur der jeweiligen Batterie herstellt. Die stärke Batterie, also die Batterie mit höherem Ladezustand unterstütz dabei die schwächere Batterie, so dass die Restnutzungszeit der einen optischen Vorrichtung sich reduziert und die er anderen optischen Vorrichtung sich verlängert. Die Gesamtnutzungszeit des optischen Systems wird damit verlängert da ein Einsatz mit nur einer optischen Vorrichtung einen erheblichen Komfortmangel darstellt. Ein Batteriewechsel im laufenden Betrieb ist zudem ebenfalls möglich.

Bei der Auswertung von Umgebungsparametern kann zum Beispiel die Helligkeit der Umgebung gemessen werden und die jeweilige Verstärkungsweise und der jeweilige Verstärkungsgrad der optischen Vorrichtungen in Form von Nachtsichtgeräten angepasst werden. Bei ansteigender Helligkeit kann dabei von der Auswertevorrichtung der Grad der Verstärkung heruntergeregelt werden, während bei abnehmender Helligkeit, insbesondere bei unzureichender Restlichtmenge, eine Infrarotlampe zugeschaltet werden kann. Diese Infrarotlampe kann dabei an einer optischen Vorrichtung oder auch an beiden optischen Vorrichtungen vorgesehen oder sogar integral mit diesen ausgeführt sein. Bei einem erfindungsgemäßen System kann eine zusätzliche IR-Beleuchtung in mehreren Intensitätsstufen zuschaltbar sein, die Gefahr, aufgeklärt zu werden, wird so reduziert.

Weiterhin verfügt die Verbindungsbrücke vorteilhafterweise über einen Magnetsensor, um den Lagemagneten einer Helm- oder Kopfhalterung auszulesen, der ebenfalls mit der Auswertevorrichtung verbunden sein kann.

Neben dem Vorsehen einer Auswertevorrichtung ist auch eine Regelvorrichtung vorgesehen die mit der Auswertevorrichtung elektronisch zum Austausch von Signalen verbunden ist und in Abhängigkeit der Signale von der Auswertevorrichtung wenigstens eine der optischen Vorrichtungen regelt. Die Regelung kann dabei zum Beispiel wie im voran stehenden Absatz beschrieben durchgeführt werden.

Die Erfindung bildet so ein Nachtsichtbinokular nicht als einfache mechanische Verbindung von zwei getrennten optischen Vorrichtungen, sondern durch das Einführen einer Auswerteeinheit entsteht ein aus zwei optischen Vorrichtungen zusammengesetztes, vollfunktionsfähiges Binokular. Also eine Einheit, die durch ein Bedienelement steuerbar ist. Im Gegensatz dazu muss der Betriebszustand eines Binokulars im bisherigen Stand der Technik jeweils einzeln gesteuert werden. Das erfindungsgemäße System fasst zwei optische Vorrichtungen zu einem System zusammen, dass sich dann über eine Funktionseinheit bedienen lässt.

Das optische System verfügt dabei über eine Verbindungsbrücke mit wenigstens einer Kupplungsvorrichtung für jede optische Vorrichtung zur Kupplung der jeweiligen optischen Vorrichtung an die Verbindungsbrücke. Diese Kupplungsvorrichtung dient also dem reversiblen An- und Abkuppeln der jeweiligen optischen Vorrichtung an die Verbindungsbrücke. Auf diese Weise kann ein flexibles optisches System geschaffen werden, in welchem durch die Funktionalität der Verbindungsbrücke unterschiedliche optische Vorrichtungen miteinander flexibel kombiniert werden können. So ist es neben der Kombination gleichartiger Nachtsichtgeräte auch möglich die jeweilige optische Vorrichtung an unterschiedliche Sehstärken eines Benutzers anzupassen. Auch ist es möglich, optische Vorrichtungen zu kombinieren, die auf unterschiedlichen physikalischen Methoden beruhen. Beispielsweise ist eine Kombination aus einem Restlichtverstärker und einer Infrarotkamera denkbar, so dass der Benutzer auf jedem Auge zwar den gleichen Bildausschnitt der Realität, allerdings mit unterschiedlichen Ausprägungen, bzw. Verarbeitungsstufen sieht. Der Informationsgehalt eines optischen Systems kann also durch die Verwendung einer solchen Verbindungsbrücke flexibel an die Einsatzsituation angepasst werden.

Die Kupplungsvorrichtung weist dabei sowohl mechanische Kupplungsmittel, als auch elektronische Kupplungsmittel auf, die derart angeordnet sind, dass die elektronischen Kupplungsmittel einen elektronischen Kontakt zwischen der Verbindungsbrücke und der jeweiligen optischen Vorrichtung herstellen, wenn mittels der mechanischen Kupplungsmittel ein mechanischer Kontakt zwischen der jeweiligen optischen Vorrichtung und der Verbindungsbrücke hergestellt ist.

Mit anderen Worten handelt es sich bei der elektronischen Kopplung um einen Automatismus, der direkt mit der mechanischen Kupplung einhergeht. Dies hat den Vorteil, dass der Benutzer keine separate elektronische Verbindung herstellen muss, sondern bereits durch das mechanische Kuppeln die gewünschte Einsatzbereitschaft erzielt. Dabei kann dies zum Beispiel durch die Formgebung und die Anordnung der Kupplungsmittel zueinander erfolgen. Die Kupplung ist dabei sowohl in mechanischer Hinsicht, als auch in elektronischer Hinsicht reversibel. Das bedeutet, dass beliebig häufig optische Vorrichtungen an die Verbindungsbrücke angekoppelt und auch wieder abgekoppelt werden können.

Unter elektronische Kupplung ist dabei sozusagen ein intelligentes Kuppeln zu verstehen. Dies kann zum Beispiel die Möglichkeit beinhalten, elektronische Signale über die elektronischen Kupplungsmittel auszutauschen. Auch ist es denkbar, dass alternativ oder zusätzlich über die elektronischen Kupplungsmittel eine elektrische Verbindung hergestellt wird, über die Strom übertragen werden kann, also ein Stromkreis gebildet wird.

Hinsichtlich der mechanischen Kupplungsmittel sind unterschiedliche Ausführungsformen denkbar. So ist es möglich, dass die mechanische Kupplung durch einen Formschluss erzielt werden kann. Auch andere Mechanismen, wie zum Beispiel eine Klemmverbindung oder eine magnetische Kupplung sind denkbar.

Weiter ist bei der Verbindungsbrücke eine Verbindungsvorrichtung vorgesehen, die sich zumindest abschnittsweise zwischen den Kupplungsvorrichtungen für die jeweilige optische Vorrichtung erstreckt und diese mechanisch miteinander verbindet. Die mechanische Verbindung kann dabei zum Beispiel durch eine Verbindungsvorrichtung erzielt werden die als Fachwerkrahmen oder als stabiles Gehäuse ausgeführt ist. Unter mechanischer Verbindung ist dabei zu verstehen, dass zumindest teilweise eine kraftschlüssige Verbindung zwischen den Kupplungsvorrichtungen und der Verbindungsvorrichtung hergestellt ist.

Um die Flexibilität einer Verbindungsbrücke noch weiter zu erhöhen, kann es vorteilhaft sein, wenn die Verbindungsvorrichtung über zumindest ein Rotationsgelenk mit wenigstens einer der Kupplungsvorrichtungen derart verbunden ist, dass die derart verbundene Kupplungsvorrichtung zumindest teilweise um die Rotationsachse des Rotationsgelenks relativ zur Verbindungsvorrichtung rotieren kann. Auf diese Weise ist die Position der jeweiligen Kupplungsvorrichtung und damit auch der damit gekuppelten optischen Vorrichtung relativ zur Verbindungsvorrichtung flexibel einstellbar.

Zum Beispiel kann auf diese Weise der Abstand der beiden optischen Vorrichtungen zueinander in Grenzen variiert werden. Dies ist dann sinnvoll, wenn unterschiedliche Augenabstände unterschiedlicher Benutzer ausgeglichen werden sollen. Je nach Rotationsgrad kann auch ein vollständiges Wegklappen der jeweiligen optischen Vorrichtung durch eine solche Ausführungsform möglich sein. Dies ist zum Beispiel bei optischen Vorrichtungen in Form von Nachtsichtgeräten sinnvoll, wenn in einem Einsatz zwischen unterschiedlich hellen Gebieten schnell gewechselt wird.

Bewegt sich der Benutzer aus einem dunklen Bereich, in welchem er auf die optischen Vorrichtungen, also die Nachtsichtgeräte, angewiesen ist, in einen hellen Bereich, also zum Beispiel den Raum eines Hauses, so kann er durch die mögliche Rotationsbewegung schnell das Nachtsichtgerät aus seinem Blickfeld schwenken. Auf diese Weise ist ein kurzfristiges Wechseln zwischen einem Blickfeld mit optischer Vorrichtung und ohne optische Vorrichtung möglich. Eine besondere Weiterbildung sieht vor, dass ein Magnetschalter an einer Gelenkverbindung vorgesehen ist, der mit der Auswerteeinrichtung in Verbindung steht. Dieser meldet dann die jeweilige Lage der optischen Vorrichtungen an die Auswerteinheit, die dann in Zusammenwirkung mit der Regeleinrichtung gewünschte Funktionen wie beispielsweise die Restlichtverstärkung aktiviert bzw. deaktiviert.

Alternativ oder zusätzlich zu einer Verbindung über ein Rotationsgelenk kann es vorteilhaft sein, wenn bei einer Verbindungsbrücke die Verbindungsvorrichtung über zumindest ein Translationsmittel mit wenigstens einer der Kupplungsvorrichtungen derart verbunden ist, dass der Abstand der derart verbundenen Kupplungsvorrichtung zu der Verbindungsvorrichtung variierbar ist. Eine translatorische Verstellmöglichkeit ist insbesondere dann sinnvoll, wenn relativ große Abstandsunterschiede ermöglicht werden sollen. Daher ist der Einsatz eines Translationsmittels insbesondere bei der Anpassung an unterschiedliche Augenabstände unterschiedlicher Benutzer sinnvoll.

Die Translationsmittel können dabei bei besonderen Einsatzformen mit dem Rotationsgelenk gemeinsam ausgebildet sein, so dass eine gemischte Bewegung der jeweiligen Kupplungsvorrichtung und damit auch der jeweiligen gekuppelten optischen Vorrichtung, also eine Mischung aus Rotation und Translation möglich wird. Damit können auch komplexere Bewegungsmöglichkeiten der jeweiligen Kupplungsvorrichtung und damit auch der jeweiligen optischen Vorrichtung ermöglicht werden.

Die Translationsmittel können dabei zum Beispiel in Form einer Linearführung ausgebildet sein. Dabei kann ein Schlitten, der mit der Kupplungsvorrichtung verbunden ist, auf einer mit der Verbindungsvorrichtung verbundenen Schiene verschoben werden. Eine solche Schiene kann dabei sowohl entlang einer Gerade, als auch entlang einer gekrümmten Linie verlaufen. Alternativ kann auch eine Hebelkinematik vorgesehen sein, die eine translatorische Bewegung der jeweiligen Kupplungsvorrichtung relativ zur Verbindungsvorrichtung erlaubt. Eine solche Hebelkinematik kann zum Beispiel aus einer Mehrzahl von rotatorisch gelagerten Hebeln ausgebildet sein.

Bei einer weiteren Ausführungsform der vorliegenden Erfindung kann es vorteilhaft sein, wenn das elektronische Kupplungsmittel und das mechanische Kupplungsmittel wenigstens einer Kupplungsvorrichtung zumindest teilweise integral miteinander ausgeführt sind. Eine derartige Ausbildung hat den Vorteil, dass durch die integrale Ausführung der beiden funktionalen Elemente der elektronischen Kupplungsmittel und der mechanischen Kupplungsmittel das Gesamtgewicht der beiden Mittel reduziert werden kann.

Auf diese Weise kann auch das Gesamtgewicht der Verbindungsbrücke, und damit auch das Gesamtgewicht eines damit ausgestatteten optischen Systems verringert werden. Insbesondere bei optischen Systemen, die an einem Helm befestigt direkt vom Benutzer getragen werden sollen, ist eine solche Gewichtsreduzierung eine Erhöhung des Nutzungskomforts. Ein weiterer Vorteil bei der integralen Ausführungsform ist die besonders einfache Ausgestaltung der abhängigen Kupplung der elektronischen Kupplungsmittel. So können Abschnitte und/oder Flächen, die der mechanischen Kupplung dienen gleichzeitig, sozusagen als Doppelnutzung, auch zur elektronischen Kupplung verwendet werden.

Eine für bestimmte Einsätze besonders geeignete Ausführungsform der mechanischen Kupplungsmittel einer Verbindungsbrücke kann die wenigstens abschnittsweise Ausbildung als Schwalbenschwanzführung sein. Eine solche Schwalbenschwanzführung ist dabei mit Hinterschneidungen versehen, die spitzwinklig ausgeführt sind und mit einem entsprechenden Schwalbenschwanzprofil mechanisch zusammenwirken können. Ein solches mechanisches Zusammenwirken ist zum Beispiel durch einen Reibschluss oder auch durch einen Formschluss möglich.

Dabei ist darauf hinzuweisen, dass die Schwalbenschwanzführung auch an der jeweiligen optischen Vorrichtung und das korrespondierende Schwalbenschwanzprofil an dem jeweiligen Kupplungsmittel vorgesehen ist. Ein besonderer Vorteil der Verwendung einer Schwalbenschwanzführung und eines entsprechenden Schwalbenschwanzprofils ist das besonders einfache mechanische Kuppeln. So kann das Schwalbenschwanzprofil in die entsprechende Schwalbenschwanzführung eingeschoben werden, wodurch bereits die mechanische Kupplung, also die Möglichkeit der Kraftübertragung ausgebildet wird. Eine solche mechanische Kupplung lässt nämlich nur einen einzigen Freiheitsgrad hinsichtlich Relativbewegung zwischen der optische Vorrichtung und dem mechanischen Kupplungsmittel zu. Dieser kann in die Einschieberichtung mit einem Anschlag versehen werden, so dass die optische Vorrichtung bei Einschieben in das mechanische Kupplungsmittel in Kontakt tritt. Damit ist eine Endposition, bzw. eine Einsatzposition der optischen Vorrichtung definiert. Für hohe mechanische Beanspruchungen kann auch der letzte Freiheitsgrad an Bewegung, durch eine Sicherung gegen das Herausziehen, bzw. Herausschieben der optischen Vorrichtung aus dem mechanischen Kupplungsmittel vorgesehen werden und die optische Vorrichtung damit in dem mechanischen Kupplungsmittel arretiert werden.

Eine solche Arretierung kann nicht nur bei Ausführungsformen mit Schwalbenschwanzführung, sondern grundsätzlich bei jedem optischen System vorteilhaft sein. So können Fixiermittel vorgesehen sein zum Fixieren der mechanischen Kupplungsmittel wenigstens einer Kupplungsvorrichtung in deren mit der jeweiligen optischen Vorrichtung gekoppelten Zustand. Die Fixiermittel sind dabei als reversible Fixiermittel ausgeführt und an die Konstruktion der mechanischen Kupplungsmittel angepasst. Je nach Art der mechanischen Kupplungsmittel werden die notwendige Anzahl der durch die Kupplungsmittel vorgegebenen und nach der Kupplung verbliebenen Freiheitsgrade abgesichert und damit die optische Vorrichtung statisch bestimmt in dem mechanischen Kupplungsmittel gelagert. Zum Beispiel ist das Vorsehen einer Arretierplatte denkbar, welche je nach Rotationsposition den letzten Freiheitsgrad der optischen Vorrichtung in Bezug auf die mechanischen Kupplungsmittel nimmt. Vorteilhaft kann es auch sein, wenn die Fixiermittel zentral für alle mechanischen Kupplungsmittel aller Kupplungsvorrichtungen vorgesehen sind. Auf diese Weise ist neben einer Gewichtsreduktion auch eine Verbesserung der Nutzung möglich, da nur ein einziger Arretierungsschritt, also ein einziger Fixierungsschritt durchgeführt werden muss.

Die elektronischen Kupplungsmittel eines erfindungsgemäßen optischen Systems können dabei zumindest abschnittsweise durch Kontaktflächen gebildet sind, die in Kontakt mit korrespondierenden Kontaktflächen der jeweiligen optischen Vorrichtung treten können. In besonders einfachen Fällen kommen dabei die jeweils korrespondierenden Kontaktflächen des jeweiligen elektronischen Kupplungsmittels und der jeweiligen optischen Vorrichtung mit einander in Kontakt. Das bedeutet, dass die Kontaktflächen aufeinander zum liegen kommen, so dass ein elektronischer Kontakt hinsichtlich des Austauschs von Signalen oder die Herstellung einer elektrischen Verbindung möglich ist. Dabei sind die Kontaktflächen, wie grundsätzlich alle Kontaktabschnitte der elektronischen Kupplungsmittel aus einem elektrisch leitenden Material gefertigt.

Bei Ausführungsformen, bei denen die elektrischen Kupplungsmittel mehrere Kontaktflächen, bzw. mehrere Kontaktabschnitte aufweist, ist es vorteilhaft, wenn die Anordnung dieser Kontaktabschnitte oder Kontaktflächen asymmetrisch ist. Eine derartige asymmetrische Ausbildung hat den Vorteil, dass ein fehlerhaftes Verbinden, also ein fehlerhaftes Kuppeln der elektronischen Kupplungsmittel vermieden ist. Dies ist insbesondere bei Einsatzsituationen wichtig, bei welchen ein Stromkreis, also eine elektrische Verbindung, hergestellt werden soll, um einen Kurzschluss zu vermeiden.

Eine alternative Ausführungsform kann elektronische Kupplungsmittel vorsehen die bei wenigstens einer Kupplungsvorrichtung durch Steckverbindungen gebildet sind. Solche Steckverbindungen sind dabei zum Beispiel mit einer Schnapprastverbindung ausgestattet, die ein reversibles Einrasten der hergestellten elektronischen Kupplung ermöglicht. Auf diese Weise ist ein versehentliches Trennen der elektronischen Kupplung weitestgehend ausgeschlossen. Insbesondere in Einsatzsituationen, in welchen hohe mechanische Belastungen auf die Verbindungsbrücke und die Kupplungsvorrichtung wirken können, ist das Absichern der elektronischen Kupplung von Vorteil. Ein versehentliches Entkoppeln der optischen Vorrichtungen, was im schlimmsten Fall zu einem Ausschalten der jeweiligen optischen Vorrichtung, zum Beispiel bei einem Nachtsichtgerät zum Abdunkeln des Sichtfeldes, führen würde, wird damit vermieden.

Je nach Ausgestaltungsform des optischen Systems kann es vorteilhaft sein, wenn die mechanischen Kupplungsmittel wenigstens einer Kupplungsvorrichtung derart ausgestaltet sind, dass die Position der jeweiligen optischen Vorrichtung relativ zur Verbindungsbrücke in axialer Richtung entlang der optischen Achse der jeweiligen optischen Vorrichtung einstellbar ist. Die optische Achse der Vorrichtung ist dabei durch die Sichtlinie, also die Hauptsichtachse der jeweiligen optischen Vorrichtung definiert. Mit anderen Worten kann auf diese Weise der Abstand zum Auge eines Benutzers von der optischen Vorrichtung variiert werden. Diese Variation kann zum Beispiel durch das Variieren eines Anschlages in einer Führung der mechanischen Kupplungsmittel ausgebildet sein.

Gegenstand der vorliegenden Erfindung ist ein optisches System mit einer Verbindungsbrücke und zwei optischen Vorrichtungen, wobei die optischen Vorrichtungen ebenfalls jeweils eine Kupplungsvorrichtung mit mechanischem Kupplungsmittel und elektronischem Kupplungsmittel aufweisen, die für die mechanische und die elektronische Kupplung mit der Kupplungsvorrichtung der Verbindungsbrücke ausgestaltet sind.

Mit anderen Worten sind die mechanischen Kupplungsmittel und die elektronischen Kupplungsmittel der jeweiligen Kupplungsvorrichtung der optischen Vorrichtungen und der Verbindungsbrücke komplementär, bzw. korrespondierend ausgestaltet. Damit lässt sich ein optisches System erzielen, welches sämtliche Vorteile mit sich bringt, wie sie in einem Einsatzzweck gefordert sind.

Vorteilhafter Weise sind die elektronischen Kupplungsmittel der optischen Vorrichtungen bei einem erfindungsgemäßen optischen System asymmetrisch ausgebildet. Dies ermöglicht es, dass beim mechanischen Kuppeln der optischen Vorrichtungen mit der Verbindungsbrücke ein falsches Verbinden der elektronischen Kupplungsmittel beider Komponenten vermieden wird. Insbesondere ein Kurzschluss wird auf diese Weise verhindert.

Besonders vorteilhaft sieht die Erfindung zudem vor, dass es sich bei den optischen Vorrichtungen um Monokulare handelt. Monokulare sind modular aufgebaute optische Vorrichtungen, die mithin selbst über sämtliche Merkmale einer optischen Vorrichtung mit einer Elektronik verfügen. Beispielsweise sind häufig in jedes Monokular eigene Spannungsversorgungen sowie Bedienelemente integriert. Das bedeutet, das bei Betätigung eines Bedienelements eines Monokulars, die korrespondierende Funktion in einem weiteren Monokular über die Auswertevorrichtung und Regeleinrichtung mit geschaltet wird.

Ein derartiges erfindungsgemäßes optisches System weist dabei optische Vorrichtungen insbesondere in Form von Nachtsichtgeräten auf. Diese Nachtsichtgeräte sind dabei zum Beispiel in Form von Restlichtverstärkern ausgebildet. Da diese Nachtsichtgeräte komplexe Vorrichtungen sind, die insbesondere über eine Stromversorgung mittels Batterie verfügen, kommen die Vorteile der vorliegenden Erfindung besonders intensiv zur Geltung. Sowohl eine gewichtsreduzierte Ausführung, wie auch eine verlängerte Nutzungsdauer erhöhen den Komfort eines derartigen optischen Systems

Bei einer Weiterbildung der Erfindung, sind die Monokulare mit je einer Bildverstärkerröhre ausgestattet. Diese Bildverstärkerröhren sind modulare Bauteile, die damit sehr leicht aus dem Monokular entfernt und gegen eine andere technische Einrichtung, beispielsweise einen Entfernungsmesser, getauscht werden können. Das optische System ist somit äußerst vielseitig anwendbar.

Bei der Verwendung von optischen Vorrichtungen in Form von Nachtsichtgeräten kann es weiter von Vorteil sein, wenn zumindest eines der Monokulare mit einer zuschaltbaren Lichtquelle versehen ist. Diese zuschaltbare Lichtquelle dient dazu bei zu geringer Restlichtmenge ein ausreichend helles Bild zu ermöglichen. Um den Benutzer eines erfindungsgemäßen optischen Systems vor Entdeckung zu schützen ist dabei diese Lichtquelle vorzugsweise im für das menschliche Auge nicht sichtbaren Wellenlängenbereich ausgebildet. Zum Beispiel ist die Verwendung einer Infrarotlampe denkbar. Die Lichtquelle, zum Beispiel in Form von Infrarotlicht, kann dabei als besonders leichte Ausführungsform als LED ausgeführt sein. Neben dem besonders geringen Gewicht ist dabei der geringe Stromverbrauch einer LED als Lichtquelle vorteilhaft, da diese damit nur in geringem Maße die Stromversorgung, also die Batterie des jeweiligen Nachtsichtgerätes belastet.

Allerdings können bei einem erfindungsgemäßen optischen System auch stärkere Infrarotlampen zum Einsatz kommen, da der erhöhte Stromverbrauch dieser stärkeren Lampen über die Auswertevorrichtung und die elektronischen Kupplungsmittel von beiden Batterien der beiden Nachtsichtgeräte gespeist werden kann. Damit ermöglicht erst die Verwendung eines erfindungsgemäßen optischen Systems einen solchen Einsatz der Infrarotlampe mit hohem Stromverbrauch mit gleichzeitig annehmbarer Nutzungsdauer.

Eine bevorzugte Weiterentwicklung der Erfindung verfügt über Monokulare, die über ein Okular und ein Objektiv verfügen, die derart ausgestaltet sind, dass ein Sehfeld größer 40°je Okular in der Betrachtungsebene dargestellt ist. Durch das vergrößerte Sehfeld ist das Nachtsichtsystem auch für das periphere Sehen nutzbar. Dies ist insbesondere im Flugbetrieb notwendig. Ein Helikopterpilot, der ein erfindungsgemäßes optisches System trägt, kann so auch Randbereiche in seinem Sichtfeld auslesen, er muss also nicht ständig den Kopf bewegen, um ein im Randbereich des Sichtfelds gelegenes Instrument abzulesen. Die höhere Randschärfe ermöglicht zudem mehr Ablesesicherheit, da durch höhere Auflösung des Systems mehr Details wahrgenommen werden können.

Die Erfindung wird näher erläutert anhand der beigefügten Zeichnungsfigur. Die bei der Beschreibung der Figur verwendeten Begriffe "links", "rechts", "oben", "unten" beziehe sich dabei auf die Zeichnungsfigur in einer Ausrichtung mit normal lesbaren Bezugszeichen. Es zeigt:

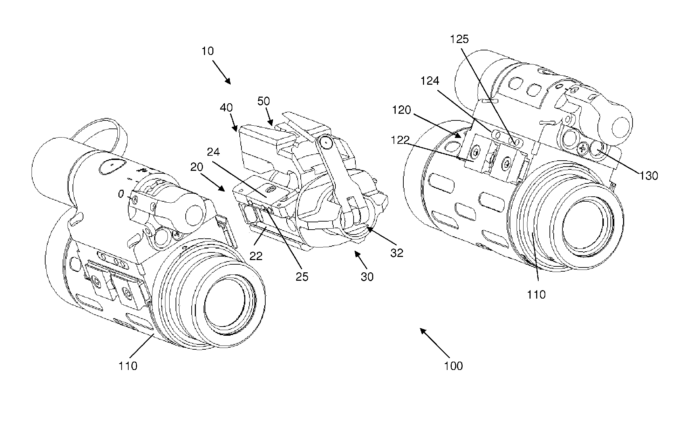

Fig. 1 eine Ausführungsform eines erfindungsgemäßen optischen Systems mit einer optischen Verbindungsbrücke

In Fig. 1 ist eine Ausführungsform der vorliegenden Erfindung dargestellt. Insbesondere ist ein optisches System 100 gezeigt, welches in unmontiertem, also ungekuppeltem Zustand eine Verbindungsbrücke 10 und zwei optische Vorrichtungen 110 in Form von Nachtsichtgeräten aufweist. Die Nachtsichtgeräte sind dabei als Restlichtverstärker ausgestaltet. Nachfolgend soll die Funktionalität der Verbindungsbrücke 10 alleine, wie auch im Zusammenhang mit den optischen Vorrichtungen 110 erläutert werden.

Die Verbindungsbrücke 10 ist in Fig. 1 im ungekuppelten Zustand dargestellt. Sie weist an beiden Seiten jeweils eine Kupplungsvorrichtung 20 auf, von denen eine in der Fig. 1 zu erkennen ist. Jede dieser beiden Kupplungsvorrichtungen 20 weist mechanische Kupplungsmittel 22 und elektronische Kupplungsmittel 24 auf, die jeweils zur Kupplung mit den optischen Vorrichtungen 110 dienen. Die mechanischen Kupplungsmittel 22 sind dabei als Schwalbenschwanzführung ausgebildet.

Die beiden optischen Vorrichtungen 110 weisen jeweils ebenfalls zwei Kupplungsvorrichtungen 120 auf, wobei jeweils eine Kupplungsvorrichtung 120 pro optischer Vorrichtung 110 in Fig.1 zu erkennen ist. Das Vorsehen von zwei Kupplungsvorrichtungen 120 pro optischer Vorrichtung 110 ermöglicht es, jede optische Vorrichtung 110 universell an der linken oder an der rechten Seite der Verbindungsbrücke 10 zu kuppeln.

Jede der Kupplungsvorrichtungen 120 der beiden optischen Vorrichtungen 110 weist dabei ebenfalls mechanische Kupplungsmittel 122 und elektronische Kupplungsmittel 124 auf. Die Kupplungsmittel 122 und 124 der Kupplungsvorrichtungen 120 sind dabei an die Kupplungsmittel 22 und 24 der Verbindungsbrücke 10 angepasst. So sind die mechanischen Kupplungsmittel 122 der optischen Vorrichtungen 110 jeweils als Schwalbenschwanzprofil ausgebildet. Dieses Schwalbenschwanzprofil kann in die Schwalbenschwanzführung der mechanischen Kupplungsmittel 22 der Verbindungsbrücke 10 eingeschoben werden. Dabei findet dieses Schieben entlang der optischen Achse der jeweiligen optischen Vorrichtung 110 statt. Durch einen nicht näher dargestellten Anschlag in dem mechanischen Kupplungsmittel 22 der Verbindungsbrücke 10 ist die Position der optischen Vorrichtung 110 relativ zu dieser optischen Achse festlegbar.

Die Schwalbenschwanzführung wirkt zusammen mit dem Schwalbenschwanzprofil über Formschluss zwischen der Kupplungsvorrichtung 20 der Verbindungsbrücke 10 und der Kupplungsvorrichtung 120 der optischen Vorrichtung 110. Der Formschuss fungiert auch als Kraftschluss. Mit andern Worten ist auf diese Weise die optische Vorrichtung 110 in dem mechanischen Kupplungsmittel 20 der Verbindungsbrücke 10 gelagert.

Um die Lagerung der optischen Vorrichtung 110 noch weiter zu verbessern, ist bei der Ausführungsform gemäß Fig. 1 ein Fixiermittel 32 an der Verbindungsvorrichtung 30 der Verbindungsbrücke 10 vorgesehen. Dieses Fixiermittel 32 ist dabei als Arretierplatte mit einem Spannhebel ausgebildet. Die Position dieses Fixiermittels 32 ist in Fig. 1 in geschlossener Form dargestellt.

Zum Einschieben der optischen Vorrichtungen 110, also zum Kuppeln dieser mit der Verbindungsbrücke 10, wird der Spannhebel des Fixiermittels 32 gespannt, also in Fig. 1 nach rechts vorne bewegt. Anschließend kann die Arretierplatte des Fixiermittels 32 um 90° gedreht werden und gibt so den Zugang zu den mechanischen Kupplungsmitteln 22 der Verbindungsbrücke 10 frei. Die Schwalbenschwanzprofile der optischen Vorrichtungen 110 können aufgeschoben und damit die mechanische Kupplung hergestellt werden. Nachfolgend wird die Arretierplatte wieder um 90° geschwenkt und blockiert in dieser Position die mechanischen Kupplungsmittel 22 der Verbindungsbrücke 10, bzw. die mechanischen Kupplungsmittel 122 der optischen Vorrichtung 110 im mechanisch gekuppelten Zustand. Die optische Vorrichtung 110 ist in diesem Zustand statisch bestimmt gelagert.

Neben den mechanischen Kupplungsmitteln 22, bzw. 122 sind sowohl bei den optischen Verbindungsvorrichtungen 110, als auch bei den Verbindungsbrücken 10 elektronische Kupplungsmittel 24, bzw. 124 vorgesehen. An beiden Komponenten, also an den optischen Vorrichtungen 110, wie auch an der Verbindungsbrücke 10 sind diese elektronischen Kupplungsmittel 24 und 124 als drei flächig ausgebildete Kontaktpunkte 125 vorgesehen. Die Anordnung dieser drei Kontaktpunkte 125 ist jeweils asymmetrisch, so dass ein falsches Verbinden, also ein falsches elektronisches Kontaktieren ausgeschlossen ist.

Die elektronischen Kupplungsmittel 24 und 124 sind dabei derart angeordnet, dass sie automatisch miteinander in Kontakt treten, sobald die mechanischen Kupplungsmittel 22 und 122 miteinander gekuppelt worden sind. Die relative Position der optischen Vorrichtungen 110 zu der Verbindungsbrücke 10 und damit auch die relative Position der elektronischen Kupplungsmittel 24 uns 124 zueinander ist dabei, einerseits durch die Schwalbenschwanzführung, andererseits durch die Kombination aus einem Anschlag und dem Fixiermittel 32 sichergestellt. Damit ergibt sich für die elektronischen Kupplungsmittel 124 der optischen Vorrichtungen 110 in mechanisch gekuppeltem Zustand nur eine einzige definierte Position relativ zu den elektronischen Kupplungsmitteln 24 der Verbindungsbrücke 10. Auf diese Weise kann durch die exakt definierte Positionierung in Abhängigkeit der mechanischen Kupplungsmittel 22 und 122 automatisch auch die elektronische Kupplung hergestellt werden.

Nicht näher dargestellt sind die Auswertevorrichtung 40 und die Regelvorrichtung 50, die im Inneren der Verbindungsvorrichtung 30 der Verbindungsbrücke 10 angeordnet sind. Diese sind beide in dieser Ausführungsform als eine zentrale Rechnereinheit ausgeführt und stehen über die elektronischen Kupplungsmittel 24 der Verbindungsbrücke 10 im gekuppelten Zustand mit der elektronischen Kupplungsvorrichtung 124 der jeweiligen optischen Vorrichtung 110 in Verbindung. Dabei kann neben einem reinen Signalaustausch auch eine elektrische Verbindung zwischen den beiden optischen Vorrichtungen 110 zueinander hergestellt werden, so dass zum Beispiel ein Austausch, bzw. ein Unterstützen der optischen Vorrichtungen 110 gegenseitig bei schwacher Batterie möglich ist.

Die Verbindungsvorrichtung 30 ist dabei als mechanisch stabiles Gehäuse ausgebildet, das neben der mechanischen Verbindung der beiden Kupplungsvorrichtungen 20 auch die Einhausung der Auswertevorrichtung 40 und der Regelvorrichtung 50 übernimmt.

Weiter ist an der Verbindungsvorrichtung noch eine rein mechanische Schnittstelle vorgesehen, welche auf der Oberseite der Verbindungsvorrichtung 30 angebracht ist. Über diese rein mechanische Schnittstelle kann die Verbindungsbrücke 10 an einer Halterung, zum Beispiel an einem Helm oder an einer Kopfhalterung angebracht werden. Auf diese Weise kann der Benutzer eines solchen optischen Systems 100 dieses nutzen, ohne es mit den Händen in Position vor seinen Augen halten zu müssen. Diese mechanische Schnittstelle ist dabei ebenfalls als reversible Schnittstelle ausgebildet, so dass ein mehrfaches Anbringen und Abnehmen der Verbindungsbrücke 10 möglich ist. Dabei ist unerheblich, ob zum Zeitpunkt des Anbringens die optischen Vorrichtungen 110 bereits an der Verbindungsbrücke 10 angekuppelt sind oder nicht.

An beiden optischen Vorrichtungen 110 ist jeweils noch ein Batteriefach vorgesehen, welches auf der Oberseite der jeweiligen optischen Vorrichtung 110 angeordnet und auf der jeweiligen Hinterseite mit einem Deckel versehen ist. Weiterhin sind an jeder optischen Vorrichtung 110 zwei zusätzliche Lichtquellen 130 vorgesehen, die bei der Ausführungsform der Fig. 1 als Infrarot LED ausgebildet sind. Diese werden im Falle nicht ausreichender Lichtverhältnisse für die Restlichverstärkung der optischen Vorrichtungen 110 eingeschaltet. Sie werden ebenfalls über die Batterie der jeweiligen optischen Vorrichtung 110 mit Strom versorgt.

Je nach Beleuchtungssituation wird entschieden ob eine oder alle Lichtquellen eingeschaltet werden. Zudem bietet die Anordnung mit einer Vielzahl von LED's eine Ausfallsicherheit.

### Bezugszeichenliste

- 10: Verbindungsbrücke
- 20: Kupplungsvorrichtung
- 22: mechanische Kupplungsmittel
- 24: elektronische Kupplungsmittel
- 25: Kontaktflächen
- 30: Verbindungsvorrichtung
- 32: Fixiermittel
- 40: Auswertevorrichtung
- 50: Regelvorrichtung
- 100: optisches System
- 110: optische Vorrichtung
- 120: Kupplungsvorrichtung
- 122: mechanische Kupplungsmittel
- 124: elektronische Kupplungsmittel
- 125: Kontaktflächen
- 130: Lichtquelle

## Patentansprüche

1. Optisches System (100) mit einer Verbindungsbrücke (10) und mindestens zwei optischen Vorrichtungen (110), die jeweils eine Kupplungsvorrichtung (120) mit mechanischem Kupplungsmittel (122) aufweisen, die für eine mechanische Kupplungsvorrichtung (20) der Verbindungsbrücke (10) ausgestaltet sind, wobei die Verbindungsbrücke (10) eine Verbindungsvorrichtung (30) aufweist, die sich zumindest abschnittsweise zwischen den Kupplungsvorrichtungen (20) erstreckt und diese mechanisch miteinander verbindet, wobei die Verbindungsbrücke (10) elektronische Kupplungsmittel (24) aufweist, die derart angeordnet sind, dass die elektronischen Kupplungsmittel (24) einen elektronischen Kontakt zwischen der Verbindungsbrücke (10) und der jeweiligen optischen Vorrichtung (110) herstellen, wenn mittels der mechanischen Kupplungsmittel (22) ein mechanischer Kontakt zwischen der jeweiligen optischen Vorrichtung (110) und der Verbindungsbrücke (10) hergestellt ist, und wobei die Verbindungsbrücke (10) eine Auswertevorrichtung (40) aufweist, die mit den elektronischen Kupplungsmitteln (24) elektronisch verbunden ist und mit diesen elektronische Signale austauschen kann, sodass die optischen Vorrichtungen (110) elektronisch mit der Auswertevorrichtung (40) verbunden sind, und wobei eine Regelvorrichtung (50) vorgesehen ist, die mit der Auswertevorrichtung (40) elektronisch zum Austausch von Signalen verbunden ist und in Abhängigkeit der Signale von der Auswertevorrichtung (40) wenigstens eine der optischen Vorrichtungen (110) regelt,
**dadurch gekennzeichnet, dass** die optischen Vorrichtungen (110) jeweils eine eigene Spannungsversorgung und eigene Bedienelemente aufweisen, und dass bei Betätigung eines Bedienelements einer optischen Vorrichtung (110), die korrespondierende Funktion in einer weiteren optischen Vorrichtung (110) über die Auswertevorrichtung und die Regeleinrichtung mit geschaltet wird.

2. Optisches System (100) nach Anspruch 1, **dadurch gekennzeichnet, dass** die Auswertevorrichtung (40) empfangene Signale der optischen Vorrichtungen (110) hinsichtlich wenigstens einem der folgenden Parameter auswertet:
▪ Batteriestatus der optischen Vorrichtungen
▪ Nutzungssituation der optischen Vorrichtungen
▪ Umgebungsparameter der optischen Nutzungssituation
▪ Restlichtmenge

3. Optisches System (100) nach einem der vorangegangenen Ansprüche, **dadurch gekennzeichnet, dass** die Auswertevorrichtung (40) eine elektrische Verbindung zwischen den elektronischen Kupplungsmitteln (24) der Kupplungsvorrichtungen (20) herstellen kann.

4. Optisches System (100) nach einem der vorangegangenen Ansprüche, **dadurch gekennzeichnet, dass** es sich bei den optischen Vorrichtungen (110) um Monokulare handelt.

5. Optisches System (100) nach Anspruch 4, **dadurch gekennzeichnet, dass** zumindest eines der Monokulare mit einer Bildverstärkerröhre ausgestattet ist.

6. Optisches System (100) nach Anspruch 4 oder 5, **dadurch gekennzeichnet, dass** zumindest eines der Monokulare mit mindestens einer zuschaltbaren Lichtquelle (130) versehen ist.

7. Optisches System (100) nach einem der Ansprüche 4 bis 6, **dadurch gekennzeichnet, dass** jedes der Monokulare über ein Okular und ein Objektiv verfügt, die derart ausgestaltet sind, dass ein Sehfeld größer 40° in der Betrachtungsebene dargestellt ist.

## Claims

1. An optical system (100) having a connection bridge (10) and at least two optical devices (110), which in each case have a coupling device (120) with a mechanical coupling means (122), which are designed for a mechanical coupling device (20) of the connection bridge (10), wherein the connecting bridge (10) has a connecting device (30), which extends at least in sections between the coupling devices (20) and connects the latter mechanically with each other, wherein the connecting bridge (10) has electronic coupling means (24), which are arranged in such a way that the electronic coupling means (24) establish an electronic contact between the connection bridge (10) and the respective optical device (110), if a mechanical contact is established between the respective optical device (110) and the connection bridge (10) by means of the mechanical coupling means (22) and wherein the connecting bridge (10) has an evaluation device (40), which is connected electronically to the electronic coupling means (24) and can exchange electronic signals with the latter, so that the optical devices (110) are connected electronically with the evaluation device (40), and wherein a controller (50) is provided, which is connected with the evaluation device (40) electronically for the exchange of signals and depending on the signals from the evaluation device (40) controls at least one of the optical devices (110),
**characterized**
**in that** the optical devices (110) in each case have their own power supply and their own operating elements, and that upon activation of an operating element of an optical device (110), the corresponding function in another optical device (110) is switched by means of the evaluation device and the control device.

2. An optical system (100) according to claim 1, **characterized in that** the evaluation device (40) evaluates received signals of the optical devices (110) with regard to at least one of the following parameters:
▪ Battery status of the optical devices
▪ Usage situation of the optical devices
▪ Environmental parameters of the optical usage situation
▪ Residual quantity of light

3. An optical system (100) according to one of the preceding claims, **characterized in that** the evaluation device (40) can establish an electrical connection between the electronic coupling means (24) of the coupling devices (20).

4. An optical system (100) according to one of the preceding claims, **characterized in that** the optical devices (110) are monocular.

5. An optical system (100) according to claim 4, **characterized in that** at least one of the monocular devices is designed with an image intensifier tube.

6. An optical system (100) according to claim 4 or 5, **characterized in that** at least one of the monocular devices is provided with at least one connectible light source (130).

7. An optical system (100) according to one of claims 4 to 6, **characterized in that** each of the monocular devices has an ocular and a lens, which are designed in such a way that a visual field greater than 40° is described in the viewing plane.

## Revendications

1. Système optique (100) avec un pont de liaison (10) et au moins deux dispositifs optiques (110), qui comportent chacun un dispositif de couplage (120) avec un moyen de couplage mécanique (122) conçu pour un dispositif de couplage mécanique (20) du pont de liaison (10), le pont de liaison (10) comportant un dispositif de liaison (30) qui s'étend au moins en partie entre les dispositifs de couplage (20) et qui relie ceux-ci entre eux mécaniquement, le pont de liaison (10) comportant des moyens de couplage électroniques (24) qui sont agencés de telle sorte que les moyens de couplage électroniques (24) établissent un contact électronique entre le pont de liaison (10) et le dispositif optique respectif (110) lorsqu'un contact mécanique entre le dispositif optique respectif (110) et le pont de liaison (10) est établi par le moyen de couplage mécanique (22) et le pont de liaison (10) comportant un dispositif d'évaluation (40) qui est relié électroniquement aux moyens de couplage électroniques (24) et qui peut échanger avec ceux-ci des signaux électroniques de telle sorte que les dispositifs optiques (110) sont reliés électroniquement au dispositif d'évaluation (40), un dispositif de réglage (50) étant prévu, lequel est relié électroniquement au dispositif d'évaluation (40) pour l'échange de signaux et lequel règle au moins l'un des dispositifs optiques (110) en fonction des signaux du dispositif d'évaluation (40), **caractérisé en ce que** les dispositifs optiques (110) comportent chacun leur propre alimentation en tension et leurs propres éléments de commande et **en ce que**, lors de l'actionnement d'un élément de commande d'un dispositif optique (110), la fonction correspondante est aussi commutée dans un autre dispositif optique (110) par l'intermédiaire du dispositif d'évaluation et du dispositif de réglage.

2. Système optique (100) selon la revendication 1, **caractérisé en ce que** le dispositif d'évaluation (40) évalue des signaux reçus des dispositifs optiques (110) à l'aune d'au moins un des paramètres suivants :
- état de batterie des dispositifs optiques,
- situation d'utilisation des dispositifs optiques,
- paramètres d'environnement de la situation d'utilisation optique,
- quantité de lumière résiduelle.

3. Système optique (100) selon l'une des revendications précédentes, **caractérisé en ce que** le dispositif d'évaluation (40) peut établir une liaison électrique entre les moyens de couplage électroniques (24) des dispositifs de couplage (20).

4. Système optique (100) selon l'une des revendications précédentes, **caractérisé en ce que** les dispositifs optiques (110) sont des monoculaires.

5. Système optique (100) selon la revendication 4, **caractérisé en ce qu'**au moins l'un des monoculaires est équipé d'un tube intensificateur d'images.

6. Système optique (100) selon la revendication 4 ou 5, **caractérisé en ce qu'**au moins l'un des monoculaires est équipé d'une source lumineuse (130) commutable.

7. Système optique (100) selon l'une des revendications 4 à 6, **caractérisé en ce que** chacun des monoculaires dispose d'un oculaire et d'un objectif qui sont conçus de telle sorte qu'un champ visuel de plus de 40° est représenté dans le plan d'observation.
